# EUROPEAN PATENT APPLICATION

(11) **EP 1 329 372 A2**
(43) Date of publication of application: **23.07.2003**
(21) Application number: 03380006.1
(22) Date of filing: 16.01.2003
(51) Int. Cl.: B62B 9/12

(54) **Child pushchair**

(30) Priority: 21.01.2002 ES 200200115
(71) Applicant: PLAY, S.A., 08184 Palau de Plegamans (Barcelona) (ES)
(72) Inventor: Jane Stopp, Joaquim, 08184 Palau de Plegamans (ES)
(74) Representative: Ponti Sales, Adelaida

(57) **Abstract**

The child pushchair (1) of the invention is characterised in that it comprises a piece (6) provided with movable fixing means (7a, 7b) mounted movably on the backrest (3) and/or on the seaL (4).

The movable fixing means comprises a number of first strips (7a) provided on the backrest (3) and/or on the seat (4) and a number of second strips on the back part of the movable piece (6).

A child pushchair of different appearance is achieved simply by changing said movable piece.

## Description

This invention relates to a child pushchair, comprising a piece mounted movably on its seat and its backrest.

### BACKGROUND OF THE INVENTION

Known in the art are child pushchairs which are used to take children for walks. These pushchairs are made up of a structure provided with wheels which defines a backrest, a seat and a handle for pushing said pushchair.

The backrest and the seat are made up of a cushioned body with a characteristic design. Users of this type of pushchairs, when going to buy one, must choose the desired design according to their preferences.

For the shop which sells these pushchairs and for the manufacturer itself it is very complicated to have immediately at hand all the existing designs, since the number of designs which the manufacturer places at the disposal of the purchaser is very high.

It is therefore usual for the shopkeeper to have a small number of pushchairs of this type available, while the design is chosen from a catalogue. This situation leads to major delays in delivery of the pushchair to the purchaser, for it is also complicated for the manufacturer to keep a sizeable stock of all the models of pushchair with their corresponding designs.

### DESCRIPTION OF THE INVENTION

The child pushchair of the invention manages to resolve the aforesaid disadvantages, while presenting other advantages which will be described.

The child pushchair of the invention is characterised in that it also comprises a piece provided with movable fixing means mounted movably on said backrest and/or on said seat.

Thanks to this characteristic a child pushchair of different appearance is achieved simply by changing said movable piece.

This is a great advantage for users, for shopkeepers who sell this type of pushchairs and for manufacturers. This is due to the fact that shopkeepers and manufacturers will have to keep available a much smaller number of possible designs of the pushchair, due to the possibility of altering its appearance simply by changing said movable piece. As a result, the user will be able to have the chosen pushchair within a much shorter period of time than is required at present.

Moreover, users can have different pieces so as to interchange them, for example for cleaning them, while being able to use the pushchair of the invention without interruption.

According to two alternative embodiments, said movable fixing means comprise a number of first strips provided on the backrest and/or on the seat and a number of second strips on the rear part of the movable piece, said first strips being provided with a number of hooks and said second strips being made of a pilous material, or vice versa, or else said movable fixing means are made up of zips provided on said movable piece and on said backrest and/or on said seat.

Advantageously, said movable piece is cushioned.

Preferably, the movable piece comprises a number of slots for passing through the pushchair seatbelts.

Moreover, the movable piece also comprises a pair of cushioned tubular elements which run around two of the seatbelts of the pushchair in its use position.

### BRIEF DESCRIPTION OF THE DRAWINGS

For a better understanding of all that has been described some drawings are attached which show, schematically and solely by way of non-restrictive example, a practical case of embodiment.
Figure 1 is a perspective view of the child pushchair of this invention with the movable piece removed;
Figure 2 is a perspective view of the child pushchair of this invention with the movable piece placed in its use position;

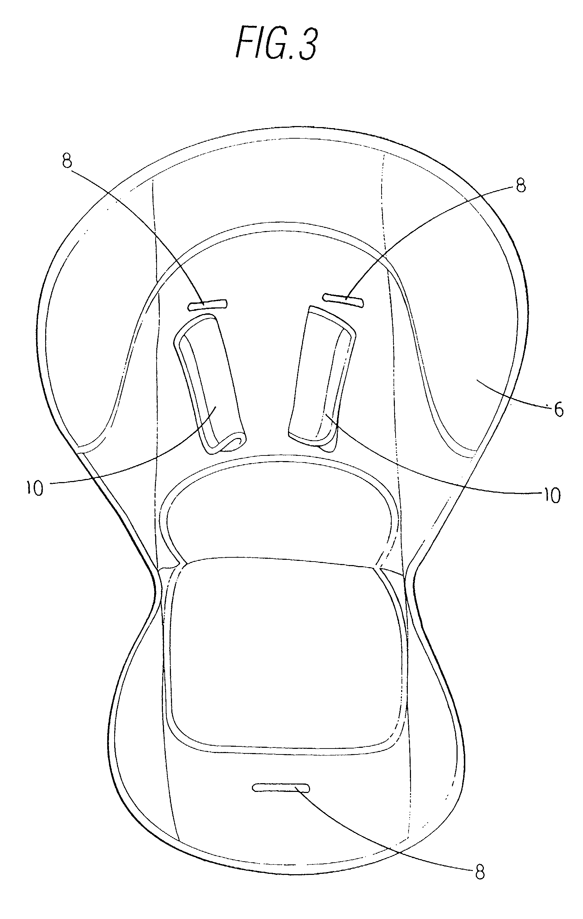

Figure 3 is a view of the front part of the movable piece which is placed on the pushchair of this invention; and
Figure 4 is a view of the rear part of the movable piece which is placed on the pushchair of this invention.

### DESCRIPTION OF A PREFERRED EMBODIMENT

As the figures show, the child pushchair of this invention, marked in general with reference number 1, is formed of a structure provided with wheels 2.

It should be stated that although in the embodiment shown the pushchair 1 comprises three wheels 2, the pushchair 1 of this invention can clearly have any suitable number of wheels.

Said structure defines a backrest 3, a seat 4 and a handle 5 for pushing the pushchair 1. Both the backrest 3 and the seat 4 are made of a cushioned material which is preferably of a dark colour such as grey or black.

Associated with said backrest 3 and said seat 4 there are a number of belts 9 for securing the child when it is seated in the pushchair 1.

According to the invention, the child pushchair also includes a piece 6 which is fixed movably onto the backrest 3 and/or the seat 4 of the pushchair 1.

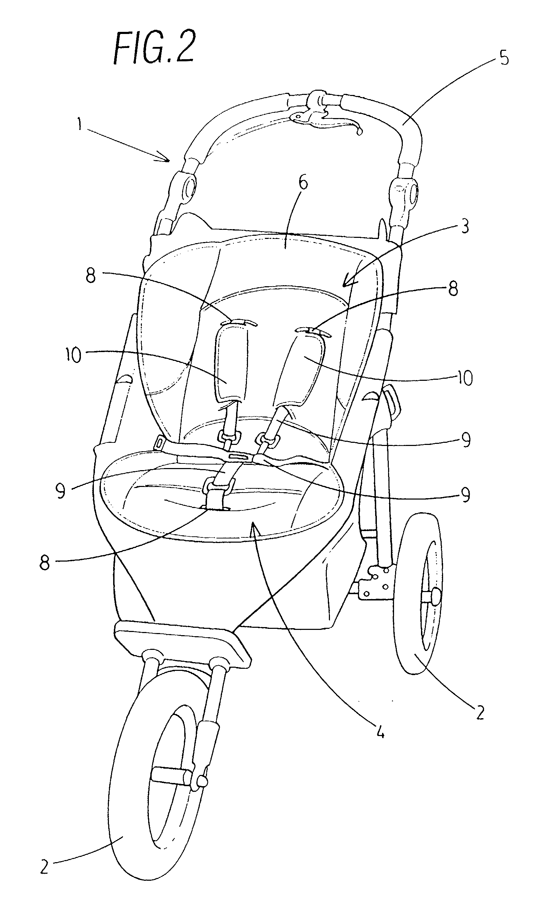

As Figure 2 shows, said movable piece 6, according to the embodiment shown, occupies substantially the entire backrest 3 and seat 4.

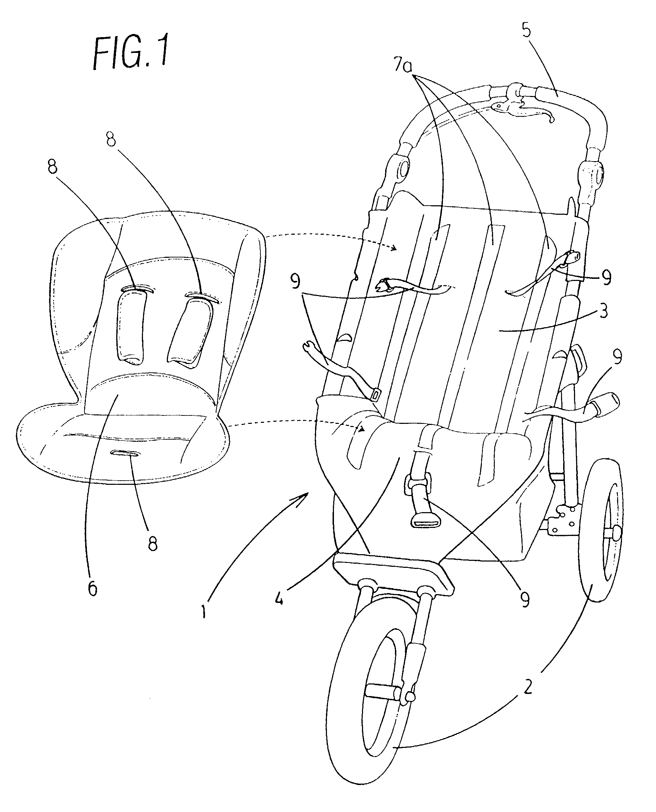

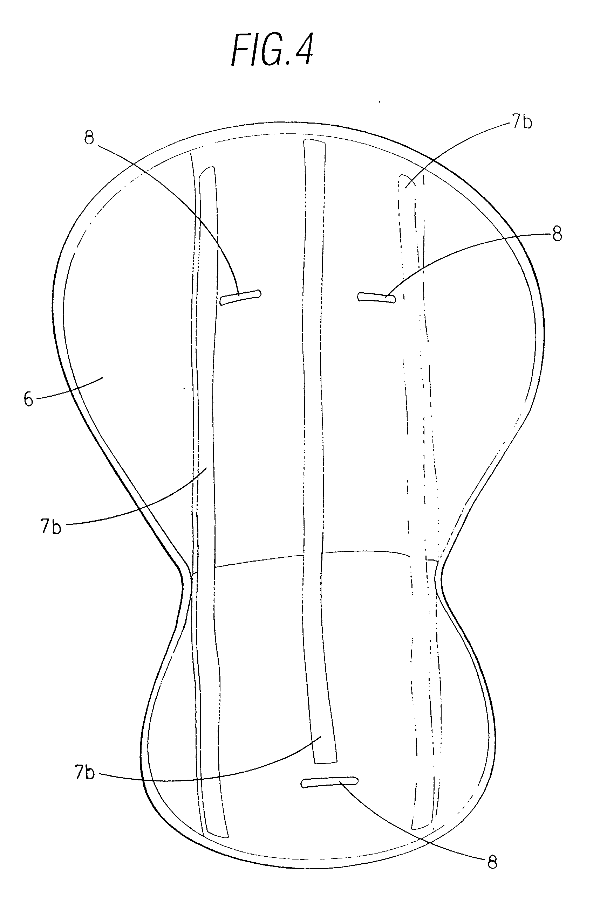

The movable fixation of said piece 6 is implemented by means of some first strips 7a (Figure 1) provided on the backrest 3 and on the seat 4. These first strips 7a are attached to some complementary second strips 7b (Figure 4) provided on the rear part of said piece 6.

Said strips 7a, 7b are preferably made of Velcro®, that is, one of said strips includes a plurality of hook-shaped projections while the other has a pilous surface. If so wished, the movable fixation between the piece 6 and the backrest 3 and/or the seat 4 can also be implemented by means of zips.

The movable piece 6 can be of any desired design, allowing the appearance of the pushchair 1 of this invention to be changed simply by changing this piece 6.

This movable piece 6 will also be of a cushioned material to ensure greatest child comfort.

The movable piece 6 also comprises a number of slots 8 for passing the belts 9 through. Furthermore, said piece 6 also comprises a pair of tubular elements 10 through which the seatbelts 9 pass in their use position.

Despite the fact that reference has been made to a specific embodiment of the invention, it will be obvious to a person skilled in the art that the child pushchair described allows of numerous variations and modifications, and that all the details mentioned can be replaced by others that are technically equivalent without departing from the sphere of protection defined by the attached claims.

## Claims

1. Child pushchair (1), comprising a structure provided with wheels (2) which defines a backrest (3), a seat (4) and a handle (5) for pushing the pushchair, **characterised in that** it also comprises a piece (6) provided with movable fixing means (7a, 7b) mounted movably on said backrest (3) and/or on said seat (4).

2. Child pushchair according to claim 1, **characterised in that** said movable fixing means include a number of first strips (7a) provided on the backrest (3) and/or on the seat (4) and a number of second strips (7b) on the rear part of the movable piece (6), said first strips (7a) being provided with a number of hooks and said second strips (7b) being made of a pilous material, or vice versa.

3. Child pushchair according to claim 1, **characterised in that** said movable fixing means are made up of zips (7a, 7b) provided on said movable piece (6) and on said backrest (3) and/or on said seat (4).

4. Child pushchair according to any of the preceding claims, **characterised in that** said movable piece (6) is cushioned.

5. Child pushchair according to any of the preceding claims, **characterised in that** the movable piece (6) comprises a number of slots (8) for passing through the pushchair seatbelts (9).

6. Child pushchair according to any of the preceding claims, **characterised in that** the movable piece (6) comprises a pair of cushioned tubular elements (10) which run around two of the seatbelts (9) of the pushchair in its use position.
